(19) Europäisches Patentamt
European Patent Office
Office européen des brevets

(11) EP 1 567 568 B1

(12) **EUROPEAN PATENT SPECIFICATION**

(45) Date of publication and mention of the grant of the patent:
**30.09.2009 Bulletin 2009/40**

(21) Application number: **03812152.1**

(22) Date of filing: **14.11.2003**

(51) Int Cl.:
***C08F 210/08*** *(2006.01)* ***C08F 4/6592*** *(2006.01)*

(86) International application number:
**PCT/EP2003/012944**

(87) International publication number:
**WO 2004/050713 (17.06.2004 Gazette 2004/25)**

(54) **1-Buten copolymers and process for preparing them**

1-Buten-Copolymere und Herstellungsverfahren dafür

Procédé de préparation de copolymères 1-butène et copolymères obtenus selon ce procédé

(84) Designated Contracting States:
**AT BE BG CH CY CZ DE DK EE ES FI FR GB GR HU IE IT LI LU MC NL PT RO SE SI SK TR**

(30) Priority: **04.12.2002 EP 02080121**
**09.12.2002 US 431802 P**

(43) Date of publication of application:
**31.08.2005 Bulletin 2005/35**

(73) Proprietor: **Basell Polyolefine GmbH**
**50389 Wesseling (DE)**

(72) Inventors:
- **RESCONI, Luigi**
**I-44100 Ferrara (IT)**
- **PELLICONI, Anteo**
**I-45030 Occhiobello (IT)**
- **GARAGNANI, Enea**
**I-44100 Ferrara (IT)**

(74) Representative: **Sacco, Marco et al**
**Basell Poliolefine Italia S.r.l.**
**Intellectual Property**
**P.le Privato G. Donegani, 12**
**Casella Postale 19**
**44100 Ferrara (IT)**

(56) References cited:
**EP-A- 0 353 318** **WO-A-02/100908**
**WO-A-02/100909** **WO-A-03/042258**

- **SUHM J ET AL: "Influence of metallocene structues on ethene copolymerization with 1-butene and 1-octene" JOURNAL OF MOLECULAR CATALYSIS. A, CHEMICAL, ELSEVIER, AMSTERDAM, NL, vol. 128, 1998, pages 215-227, XP002218351 ISSN: 1381-1169**
- **PATENT ABSTRACTS OF JAPAN vol. 0113, no. 49 (C-456), 14 November 1987 (1987-11-14) & JP 62 119213 A (MITSUI PETROCHEM IND LTD), 30 May 1987 (1987-05-30)**
- **DATABASE WPI Section Ch, Week 198607 Derwent Publications Ltd., London, GB; Class A17, AN 1986-044999 XP002280802 & JP 60 262804 A (MITSUI PETROCHEM IND CO LTD) 26 December 1985 (1985-12-26)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 567 568 B1

## Description

The present invention relates to a process for preparing copolymers of 1-butene and $C_5$-$C_{22}$ alpha olefins by using a metallocene-based catalyst system, and to copolymers obtained by this process.

1-Butene higher alpha-olefin polymers are known as semi-rigid resins. Due to their excellent transparency, surface non tackiness and other tensile properties they can be used, for example, for the production of packaging films or sheets or other melt-molded articles.

In the art these copolymers are obtained by using titanium based catalysts. For example EP 186 287 describes 1-butene random copolymers obtained by using titanium tetrachloride supported on magnesium chloride and vinyltrietoxysilane as external donor. EP 352 362 describes 1-butene copolymers obtained by using titanium based catalyst systems, diisobutyl phthalate as internal donor and 1,8 cineole as external donor; moreover in the comparative examples vinyltrietoxysilane is also used as external donor.

When a titanium based catalyst is used, the yield of the above process is very low. Moreover the distribution of the comonomer, as shown by the fraction of polymer soluble in diethyl ether, is not very good and can be improved.

Recently in WO 02/16450 low isotactic 1-butene copolymers obtained by using metallocene-based catalyst systems have been described. These copolymers are not endowed with high values of isotacticity. WO 02/100909, WO 02/100908 and WO 03/04258 relate to a process for polymerizing 1-butene comprising the step of contacting under polymerization conditions 1-butene and optionally from 0 to 20% by mol, of ethylene, propylene and/or an alpha olefin of formula CH2=CHZ wherein Z is a $C_3$-$C_{10}$ alkyl group, in the presence of a catalyst system containing a metallocene compounds; however preferred comonomers to be used are ethylene or propylene.

Journal of Molecular Catalysis A: Chemical 128, 1998, 215-227 relates to ethylene/1-octene and ethylene/1-butene copolymerization.

JP-A-62119213 relates to a 1-butene copolymers characterized by several features. In particular the described copolymers are endowed with the feature that in $^{13}$C-NMR spectrum of copolymer the signal based on two continuous methylene linkages is not observed between two adjacent tertiary carbon atoms in the copolymer principal chain.

JP-A-60262804 D6 relates to a polybutene resin containing from 0 to 1% by mol of C2-C12 olefins. These copolymers are obtained by using a magnesium-based Ziegler-Natta catalyst system.

EP-A-353 318 relates to a 1-butene copolymer obtained by using a magnesium-based, Ziegler-Natta catalyst system.

A process that permits to obtain an isotactic 1-butene copolymer with high molecular weight, in high yield and with a good distribution of the comonomer is therefore desirable.

An object of the present invention is a process for preparing isotactic 1-butene copolymers containing up to 30% by mol of units derived from one or more alpha olefins selected from 1-pentene, 1- hexene and 1-octene comprising, contacting 1-butene and one or more of said alpha-olefins, under polymerization conditions, in the presence of a catalyst system obtainable by contacting:

a) at least a metallocene compound of formula (I)

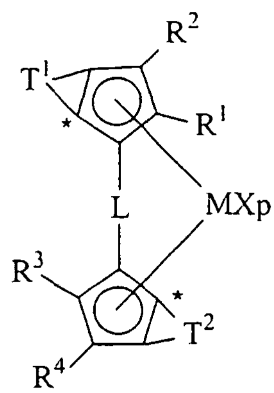

(I)

wherein

M is a transition metal belonging to group 3, 4, 5, 6 or to the lanthanide or actinide groups in the Periodic Table

of the Elements; preferably M is titanium, zirconium or hafnium;

p is an integer from 0 to 3, preferably p is 2, being equal to the formal oxidation state of the meta! M minus 2;

X, equal to or different from each other, are hydrogen atoms, halogen atoms, R, OR, $OSO_2CF_3$, OCOR, SR, $NR_2$ or $PR_2$ groups, wherein R is a linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from $C_1$-$C_{20}$ alkylidene, $C_6$-$C_{40}$ arylidene, $C_7$-$C_{40}$ alkylarylidene and $C_7$-$C_{40}$ arylalkylidene radicals; preferably X is a hydrogen atom, a halogen atom or a R group; more preferably X is chlorine or a methyl radical;

L is a divalent bridging group selected from $C_1$-$C_{20}$ alkylidene, $C_3$-$C_{20}$ cycloalkylidene, $C_6$-$C_{20}$ arylidene, $C_7$-$C_{20}$ alkylarylidene, and $C_7$-$C_{20}$ arylalkylidene radicals optionally containing heteroatoms belonging to groups 13-17 of the Periodic Table of the Elements, and silylidene radical containing up to 5 silicon atoms such as $SiMe_2$, $SiPh_2$; preferably L is selected from the group consisting of $Si(CH_3)_2$, $SiPh_2$, SiPhMe, $SiMe(SiMe_3)$, $CH_2$, $(CH_2)_2$, $(CH_2)_3$ and $C(CH_3)_2$;

$R^1$ and $R^3$, equal to or different from each other, are linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radicals, optionally containing heteroatoms belonging to groups 13-17 of the Periodic Table of the Elements;

$R^2$ and $R^4$, equal to or different from each other, are hydrogen atoms or linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radicals, optionally containing heteroatoms belonging to groups 13-17 of the Periodic Table of the Elements; preferably they are hydrogen atoms. $T^1$ and $T^2$, equal to or different from each other are moieties of formulas (II), (III) or (IV):

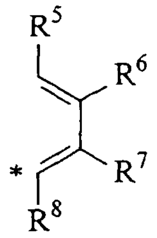
(II)

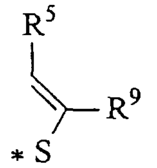
(III)

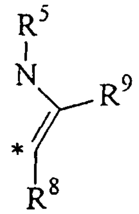
(IV)

wherein: the atom marked with the symbol * is bound to the atom marked with the same symbol in formula (I);

$R^5$, $R^6$, $R^7$, $R^8$ and $R^9$, equal to or different from each other, are hydrogen atoms, or a linear or branched, saturated or unsaturated $C_1$-$C_{20}$-alkyl, $C_3$-$C_{20}$-cycloalkyl, $C_6$-$C_{40}$-aryl, $C_7$-$C_{40}$-alkylaryl, $C_7$-$C_{40}$-arylalkyl radicals, optionally containing heteroatoms belonging to groups 13-17 of the Periodic Table of the Elements;

$R^6$ and $R^7$ can also join to form a saturated or unsaturated condensed 5 to 7 membered ring optionally containing heteroatoms belonging to groups 13-16 of the Periodic Table of the Elements; preferably $R^9$ is hydrogen or a linear or branched, saturated or unsaturated $C_1$-$C_{20}$-alkyl radical;

b) at least an alumoxane or a compound able to form an alkylmetallocene cation; and

c) optionally an organo aluminum compound.

Preferred metallocene compounds of formula (I) belongs to the following subclasses:

**Subclass (1)**

Metallocene compounds belonging to subclass (1) have the following formula (V):

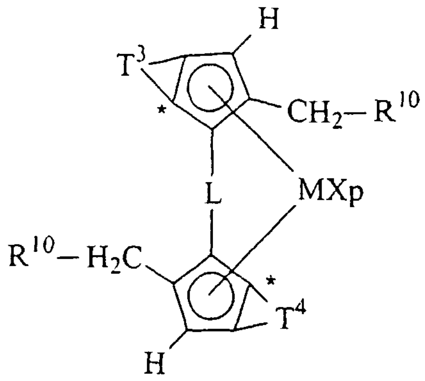

(V)

wherein M, L, X and p have been described above;

$R^{10}$, equal to or different from each other, are hydrogen atoms, or linear or branched, saturated or unsaturated $C_1$-$C_{19}$-alkyl, $C_3$-$C_{19}$-cycloalkyl, $C_6$-$C_{19}$-aryl, $C_7$-$C_{19}$-alkylaryl, $C_7$-$C_{19}$-arylalkyl radicals, optionally containing heteroatoms belonging to groups 13-17 of the Periodic Table of the Elements; preferably $R^{10}$ is a hydrogen atom or a $C_1$-$C_{19}$-alkyl radical, more preferably $R^{10}$ is hydrogen, methyl or ethyl;

$T^3$ and $T^4$, equal to or different from each other are moieties of formula (Va), (Vb) or (Vc):

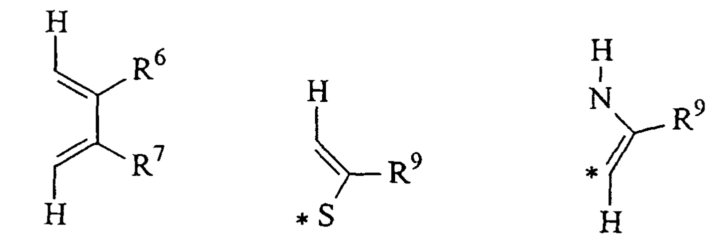

(Va) (Vb) (Vc)

wherein: the atom marked with the symbol * is bound to the atom marked with the same symbol in formula (V),

$R^6$, $R^7$ and $R^9$ have been defined above;

Preferably $R^6$ and $R^7$ are hydrogen atoms or linear or branched, saturated or unsaturated $C_1$-$C_{20}$-alkyl radicals, or they form a saturated or unsaturated 5 or 6 membered ring optionally containing heteroatoms belonging to groups 13-16 of the Periodic Table of the Elements;

Preferably $R^9$ is a linear or branched, saturated or unsaturated $C_1$-$C_{20}$-alkyl radical.

**Subclass (2)**

Metallocene compounds belonging to subclass (2) have the following formula (VI):

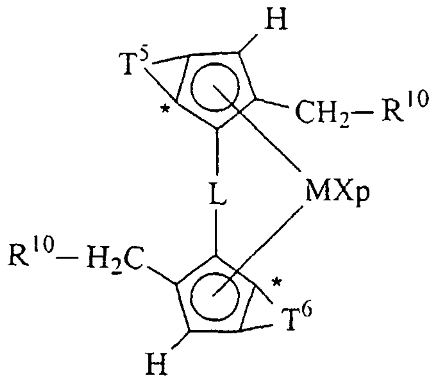

(VI)

wherein $R^{10}$, M, L, X and p have been described above;

$T^5$ and $T^6$, equal to or different from each other are moieties of formula (VIa), (VIb) or (VIc):

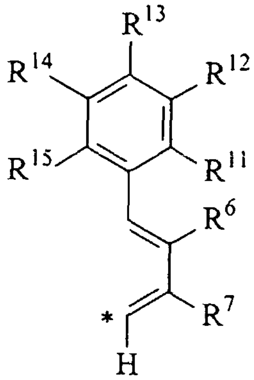

(VIa)

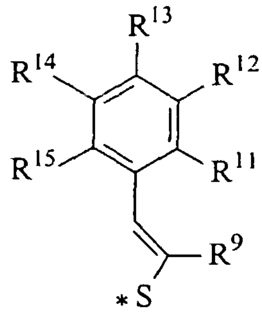

(VIb)

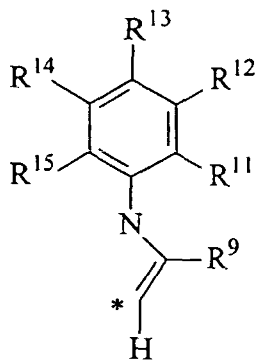

(VIc)

wherein: the atom marked with the symbol * is bound to the atom marked with the same symbol in formula (VI);

$R^6$, $R^7$ and $R^9$, have been defined above;

Preferably $R^6$ and $R^7$ are hydrogen atoms or linear or branched, saturated or unsaturated $C_1$-$C_{20}$-alkyl radicals; or they form a saturated or unsaturated 5 or 6 membered ring optionally containing heteroatoms belonging to groups 13-16 of the Periodic Table of the Elements;

Preferably $R^9$ is a hydrogen atom or a linear or branched, saturated or unsaturated $C_1$-$C_{20}$-alkyl radical;

$R^{11}$, $R^{12}$, $R^{13}$, $R^{14}$, and $R^{15}$, equal to or different from each other, are hydrogen atoms or linear or branched, saturated or unsaturated $C_1$-$C_{20}$-alkyl, $C_3$-$C_{20}$-cycloalkyl, $C_6$-$C_{20}$-aryl, $C_7$-$C_{20}$-alkylaryl, $C_7$-$C_{20}$-arylalkyl radicals, optionally containing heteroatoms belonging to groups 13-17 of the Periodic Table of the Elements, or two adjacent groups can form together a saturated or unsaturated condensed 5 or 6 membered ring optionally containing heteroatoms belonging to groups 13-16 of the Periodic Table of the Elements; preferably $R^{11}$ is a $C_1$-$C_{20}$-alkyl radical; more preferably $R^{11}$ is a methyl radical; preferably $R^{14}$ is a hydrogen atom or a $C_1$-$C_{20}$-alkyl radical; more preferably $R^{14}$ is a methyl radical; preferably $R^{12}$, $R^{13}$ and $R^{15}$ are hydrogen atoms.

Metallocene compounds belonging to formulas (I), (V) and (VI) are well known in the art; in particular they are described in USP 5,145,819, EP-A-0 485 823, WO 98/22486, WO 01/44318, USP 5,786,432 and EP02080120.5.

Preferably the metallocene compounds of formula (I) are in the racemic (rac) form.

Examples of alumoxanes suitable for use according to the present invention are methylalumoxane (MAO), tetra-(isobutyl)alumoxane (TIBAO), tetra-(2,4,4-trimethylpentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns.

Non-limiting examples of aluminium compounds according to WO 99/21899 and WO01/21674 are:

tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium,
tris(2-methyl-3-ethyl-pentyl)aluminium, tris(2-methyl-3-ethyl-hexyl)aluminium,
tris(2-methyl-3-ethyl-heptyl)aluminium, tris(2-methyl-3-propyl-hexyl)aluminium, tris(2-ethyl-3-methyl-butyl)aluminium, tris(2-ethyl-3-methyl-pentyl)aluminium, tris(2,3-diethylpentyl)aluminium, tris(2-propyl-3-methyl-butyl)aluminium, tris(2-isopropyl-3-methylbutyl)aluminium, tris(2-isobutyl-3-methyl-pentyl)aluminium, tris(2,3,3-trimethylpentyl) aluminium, tris(2,3,3-trimethyl-hexyl)aluminium, tris(2-ethyl-3,3-dimethylbutyl)aluminium, tris(2-ethyl-3,3-dimethylpentyl)aluminium, tris(2-isopropyl-3,3-dimethylbutyl)aluminium, tris(2-trimethylsilyl-propyl)aluminium, tris(2-methyl-3-phenylbutyl)aluminium, tris(2-ethyl-3-phenyl-butyl)aluminium, tris(2,3-dimethyl-3-phenylbutyl)aluminium, tris(2-phenyl-propyl)aluminium, tris[2-(4-fluoro-phenyl)-propyl]aluminium,
tris[2-(4-chloro-phenyl)-propyl]aluminium, tris[2-(3-isopropyl-phenyl)-propyl]aluminium,
tris(2-phenyl-butyl)aluminium, tris(3-methyl-2-phenyl-butyl)aluminium, tris(2-phenylpentyl)aluminium, tris[2-(pentafluorophenyl)-propyl]aluminium, tris[2,2-diphenylethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBAL), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation are compounds of formula $D^+E^-$, wherein $D^+$ is a Brønsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms. More preferably, the anion $E^-$ is an anion of the formula $BAr_4^{(-)}$, wherein the substituents Ar which can be identical or different are aryl radicals such as phenyl, pentafluorophenyl or bis (trifluoromethyl)phenyl. Tetrakis-pentafluorophenyl borate is particularly preferred examples of these compounds are described in WO 91/02012. Moreover, compounds of the formula $BAr_3$ can conveniently be used. Compounds of this type are described, for example, in the published International patent application WO 92/00333. Other examples of compounds able to form an alkylmetallocene cation are compounds of formula $BAr_3P$ wherein P is a substituted or unsubstituted pyrrol radicals. These compounds are described in WO01/62764. Other examples of cocatalyst can be found in EP 775707 and DE 19917985. Compounds containing boron atoms can be conveniently supported according to the description of DE-A-19962814 and DE-A-19962910. All these compounds containing boron atoms can be used in a molar ratio between boron and the metal of the metallocene comprised between 1:1 and 10:1; preferably 1:1 and 2.1; more preferably 1:1.

Non limiting examples of compounds of formula $D^+E^-$ are:

Triethylammoniumtetra(phenyl)borate,
Tributylammoniumtetra(phenyl)borate,
Trimethylammoniumtetra(tolyl)borate,
Tributylammoniumtetra(tolyl)borate,
Tributylammoniumtetra(pentafluorophenyl)borate,
Tributylammoniumtetra(pentafluorophenyl)aluminate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylamonium-tetrakispentafluorophenylborate,
N,N-Dimethylaniliniumtetra(phenyl)borate,
N,N-Diethylaniliniumtetra(phenyl)borate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonium-tetrakispentafluorophenylborate,

Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Triethylphosphoniumtetrakis(phenyl)borate,
Diphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(pentafluorophenyl)aluminate,
Triphenylcarbeniumtetrakis(phenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate,
N,N-Dimethylaniliniumtetrakis(pentafluorophenyl)borate.

Organic aluminum compounds used as compound c) are those of formula $H_jAlU_{3-j}$ or $H_jAl_2U_{6-j}$ described above.

The polymerization process of the present invention can be carried out in liquid phase. The polymerization medium can be 1-butene optionally in the presence of an inert hydrocarbon solvent. Said hydrocarbon solvent can be either aromatic (such as toluene) or aliphatic (such as propane, hexane, heptane, isobutane, cyclohexane and 2,2,4-trimethylpentane). Otherwise the polymerization process of the present invention can be carried out in a gas phase. Preferably the polymerization is carried out by using liquid 1-butene as the polymerization medium (bulk polymerization).

The catalyst system of the present invention can also be supported on an inert carrier. This is achieved by depositing the metallocene compound a) or the product of the reaction thereof with the component b), or the component b) and then the metallocene compound a) on an inert support such as, for example, silica, alumina, Al-Si, Al-Mg mixed oxides, magnesium halides, styrene/divinylbenzene copolymers, polyethylene or polypropylene. The supportation process is carried out in an inert solvent, such as hydrocarbon selected from toluene, hexane, pentane and propane and at a temperature ranging from 0°C to 100°C, more from 30°C to 60°C.

A particularly suitable process for supporting the catalyst system is described in WO01/44319, wherein the process comprises the steps of:

(a) preparing a catalyst solution comprising a soluble catalyst component;
(b) introducing into a contacting vessel:

 (i) a porous support material in particle form, and
 (ii) a volume of the catalyst solution not greater than the total pore volume of the porous support material introduced;

(c) discharging the material resulting from step (b) from the contacting vessel and suspending it in an inert gas flow, under such conditions that the solvent evaporates; and
(d) reintroducing at least part of the material resulting from step (c) into the contacting vessel together with another volume of the catalyst solution not greater than the total pore volume of the reintroduced material.

A suitable class of supports comprises porous organic supports functionalized with groups having active hydrogen atoms. Particularly suitable are those in which the organic support is a partially crosslinked styrene polymer. Supports of this type are described in EP 633 272.

Another class of inert supports particularly suitable for use according to the invention is that of polyolefin porous prepolymers, particularly polyethylene.

A further suitable class of inert supports for use according to the invention is that of porous magnesium halides, such as those described in WO 95/32995.

The polymerization temperature preferably ranges from 0°C to 250°C; preferably comprised between 20°C and 150°C and, more particularly between 40°C and 90°C.

The molecular weight distribution of the polymer obtained with the process of the present invention can be varied by using mixtures of different metallocene compounds or mixtures of the metallocene compound of formula (I) and a Ziegler-Natta catalyst or by carrying out the polymerization in several stages at different polymerization temperatures and/or different concentrations of the molecular weight regulators and/or different monomer concentration.

The polymerization yield depends on the purity of the transition metal organometallic catalyst compound a) in the catalyst, therefore, said compound can be used as such or can be subjected to purification treatments before use.

With the process according to the present invention it is possible to prepare isotactic 1-butene copolymers

containing up to 30% by mol of units derived from one or more alpha-olefins selected from-1-pentene, 1-hexene and 1-octene; preferably the comonomer is 1-hexene.

Preferably the content of said alpha olefins derived units ranges from 2% to 20% by mol, more preferably from 3% to 17% by mol.

The 1-butene copolymers obtained with the process of the present invention are highly isotactic, and show a high molecular weight, that renders them useful for an industrial use. Moreover the 1-butene copolymers object of the present invention are characterised by high content of diethylether solubles that is an indication of good comonomer distribution. Furthermore 4,1 regioinsertions of 1-butene are present in the polymer chain. The presence of 4,1 regioerrors along the polymer chain enhances the effect of the introduction of the comonomer, thus lowering the degree of crystallinity. The presence of 4,1 insertions of 1-butene may be evaluated by $^{13}C$-NMR. Assignments of 4,1 insertion can be made according to Busico (V. Busico, R. Cipullo, A. Borriello, Macromol. Rapid. Commun. 1995, 16, 269-274)

Thus, a further object of the present invention is an isotactic 1-butene copolymer containing from 2% to 20% by mol of units derived from one or more alpha-olefins selected from 1-pentene, 1-hexene and 1-octene having the following features:

- isotactic pentads (mmmm) >90%; preferably >95%; more preferably >98%; and
- the percentage of soluble fraction in diethylether (%SD) and the molar content of said alpha-olefin (%O) in the polymer chain meet the following relation:

$$\%SD>2.8\%O + 8;$$

and ,
- presence of 4,1 insertions in the polylmer chain.

Preferably the relation is %SD>2.8%0 + 10; more preferably the relation is %SD>2.8%O + 15; a further preferred relation is %SD>2.8%O + 20.

When the content of alpha olefins is comprised between 10% and 30% the copolymers obtained according to the present invention are characterized by the following features:

- isotactic pentads (mmmm) >90%; preferably >95%; more preferably >98%, and
- percentage of soluble fraction in diethylether >92%; preferably >94%.

Preferably the content of alpha-olefin derived units is comprised between 11% and 25%.

When the content of alpha olefin is comprised between 5% and 12% the copolymers obtained according to the present invention are characterized by the following features:

- isotactic pentads (mmmm) >90%; preferably >95%; more preferably >98%; and
- percentage of soluble fraction in diethylether >41%; preferably >46%.

The 1-butene copolymers obtained according to the present invention are further characterized by the presence of 4,1 insertions in the polymer chain. Thus a further object of the present invention is an isotactic 1-butene copolymer containing 2% to 20% by mol of units derived from one or more alpha-olefins selected from 1-pentene, 1-hexene and 1-octene having the following features:

- isotactic pentads (mmmm) >90%; preferably >95%; more preferably >98%; and
- presence of 4,1 insertions in the polymer chain.

Preferably the 4,1 insertions are higher than 0.02%, more preferably they are comprised between 0.05% and 0.4%.

The 1-butene copolymers object of the present invention are further endowed with a molecular weight distribution Mw/Mn <4; preferably Mw/Mn<3; more preferably Mw/Mn<2.5.

The molecular weight (I.V.) measured in decahydronaphtalene is higher than 1 dl/g, preferably higher than 1.25 dl/g.

The 1-butene copolymers of the present invention can be advantageously used as components in blend with other polyolefins such as isotactic or syndiotactic polypropylene homo and copolymer, 1-butene homopolymer, and ethylene homo and copolymer.

The following examples are given to illustrate the invention.

## Experimental section

The intrinsic viscosity (I.V.) was measured in decahydronaphthalene (DHN) at 135°.

The melting points of the polymers ($T_m$) were measured by using a Perkin-Elmer DSC-7 calorimeter equipped with Pyris 1 software. The instrument was calibrated at indium and zinc melting points with particular attention in determining the baseline with required accuracy.

Melting points were measured according to the following method a weighted sample (4-8 mg) obtained from the polymerization was sealed into an aluminum pan, the sample was then subjected to the following thermal treatment:

i) first heating run from room temperature to 180°C with a scanning rate of 10°C/min;
ii) annealing run at 180°C for 5 minutes;
iii) crystallization run from 180°C to 0°C, at 10°C/min in order to crystallize the sample under controlled conditions;
iv) second heating run from room temperature to 180°C.

In this second heating run, the maximum peak temperature was taken as the melting temperature ($T_m$).

The molecular weight distribution was determined on a WATERS 150 C using the following chromatographic conditions:

| | |
|---|---|
| Columns: | 3x SHODEX AT 806 MS; 1x SHODEX UT 807; 1x SHODEX AT-G; |
| Solvent: | 1,2,4 trichlorobenzene (+ 0.025% 2,6-Di-tert.Butyl-4-Methyl-Phenol); |
| Flow rate: | 0.6 - 1 ml/min; |
| Temperature: | 135 °C; |
| Detector: | INFRARED AT $\lambda \cong 3.5 \mu m$; |
| Calibration: | Universal Calibration with PS-Standards. |

$^{13}C$-NMR spectra were acquired on a DPX-400 spectrometer operating at 100.61 MHz in the Fourier transform mode at 120°C. The peak of the $2B_2$ carbon (nomenclature according to Carman, C. J.; Harrington, R. A.; Wilkes, C. E. Macromolecules 1977, 10, 536)was used as internal reference at 27.73. The samples were dissolved in 1,1,2,2-tetrachloroethane-*d2* at 120 °C with a 8% wt/v concentration. Each spectrum was acquired with a 90° pulse, 15 seconds of delay between pulses and CPD (waltz16) to remove 1H-13C coupling. About 600 transients were stored in 32K data points using a spectral window of 6000 Hz. Assignments of 4,1 insertion were made according to Busico (V. Busico, R. Cipullo, A. Borriello, Macromol. Rapid. Commun. 1995, 16, 269-274).

## Diethyl ether solubility

About 1 gram of polymer was transferred to a glass flask equipped with a magnetic stirrer and 250 $cm^3$ of diethyl ether was added. The solution was stirred for 24 hours at room temperature under $N_2$ to dissolve the soluble fraction of the polymer. After the dissolution the liquid was filtered with a paper filter, to separate the remaining solid from the solution, and was transferred to a glass flask, previously weighted. The solvent was removed under vacuum and the polymer obtained was dried in a warm vacuum oven for 1 day to eliminate all solvent traces. The flask was weighted and the quantity of soluble polymer was determined.

## Preparation of catalyst components

Rac dimethylsilylbis(2-methyl-indenyl) zirconium dichloride (A-1) was prepared according to USP 5,145,819. Rac dimethylsilandiylbis-6-[2,5-dimethyl-3-(2',5'-dimethylphenyl)cyclopentadienyl-[1,2-b]-thlophene]zirconium dichloride (A-2) is prepared according to WO01/44318.

The cocatalyst methylalumoxane (MAO) was a commercial product which was used as received (Witco AG, 10 %wt/vol toluene solution, 1.7 M in Al).

## Catalyst solution preparation procedure

3 mg of the metallocene compounds indicated in table 1 were added to a toluene solution of methylalumoxane (MAO 10% weight/volume) to obtain the desired MAO/Zr ratio. If necessary, additional toluene was added to obtain a final volume of 5-10 ml, easy to be fed into the autoclave. The catalyst solution was inserted into the steel cylinder and

then fed into the autoclave as reported above.

**Polymerization examples 1-8**

A 4.25 litres steel autoclave, equipped with magnetically stirred anchor (usual stirring rate 550 rpm) and with a Flow Record & Control systems (FRC) having maximum flow rate of 9000 gr/hour for 1-butene, was purged with hot nitrogen (1.5 barg $N_2$, 70°C, 1 hour). Then, stirring was started and 1-butene and 1-hexene were fed into the reactor (amounts indicated in table 1). Subsequently, the reactor inner temperature was raised from 30°C to the polymerisation temperature of 70°C. When pressure and temperature were constant, the catalytic solution was fed into the reactor with a nitrogen overpressure and the polymerization was carried out for the time indicated in table 1.

Then the stirring was interrupted; the pressure into the autoclave was raised to 20 bar-g with nitrogen. The bottom discharge valve was opened and the comonomer/copolymer mixture was discharged into the heated steel tank containing water at 70°C. The tank heating was switched off and a flux of 0.5 bar-g nitrogen was fed. After 1 hour cooling at room temperature the steel tank was opened and the wet polymer collected. The wet polymer was dried in a oven under nitrogen at 70°C. The polymerization conditions and the characterization data of the obtained polymers are reported in Table 1.

**Characterization of copolymers**

Samples of polymer obtained from examples 1 and 2 and a sample of an 1-butene/ethylene copolymer having an ethylene content of 2.3% by wt prepared according to example 11 of WO 02/100908 (PCT/EP02/06574) (sample A used for comparison) were mixed in a Brabender® chamber with 1% 2,6- di-t-butyl-4-methyl phenol (BHT) at 180°C and then transformed in 1.9 and 4 mm thick plaques through compression molding at 200°C with an cooling of 30°/min.

The 1.9 mm thick plaques were submitted to tensile test (according to ASTM D 638 method), while the 4.0 mm thick plaques were submitted to the flexural modulus determination according to ISO 178 method.
tensile modulus was calculated according the following equation:

$$\text{tensile modulus} = (1\text{-}3\%\ \text{chord}) = (T3\% - T1\%)/0.02$$

wherein T3% = stress at 3% deformation; and

wherein T1% = stress at 1% deformation.

The results are reported in table 2

**Table 1**

| Ex. | Met | Al/Zr | liquid phase composition | | time | Activity | $C_6$ |
|---|---|---|---|---|---|---|---|
| | | | 1-Butene, g | 1-Hexene, g | min | kg/ $g_{met}$*h | % mol (NMR) |
| 1 | A-2 | 1000 | 1350 | 69 | 30 | 135.3 | 3.22 |
| 2 | A-2 | 1000 | 1290 | 140 | 15 | 296.0 | 5.94 |
| 3 | A-2 | 1000 | 1216 | 226 | 60 | 111.3 | 11.2 |
| 4 | A-2 | 1000 | 1140 | 314 | 60 | 85.3 | 15.8 |
| 5 | A-1 | 675 | 1350 | 69 | 60 | 139 | 3.6 |
| 6 | A-1 | 675 | 1290 | 140 | 60 | 202 | 7.28 |
| 7 | A-1 | 500 | 1216 | 226 | 60 | 70 | 9.34 |
| 8 | A-1 | 675 | 1140 | 314 | 60 | 32 | 16.7 |

**Table 1 (continued)**

| Ex | 4,1 insertions | I.V. | $T_m(II)$ | $\Delta H_f$ | $M_w/M_n$ | %SD | mmmm |
|---|---|---|---|---|---|---|---|
| | % | (DHN, dL/g) | °C | J/g | | % | % |
| 1 | 0.22 | 1.56 | 94.0 | 27.3 | 2.1 | n.a. | >95 |
| 2 | 0.30 | 1.30 | 80.4 | 14.6 | 2.4 | 76.9 | >95 |
| 3 | n.a. | 1.48 | 59.6 | 10.9 | 2.2 | 94.1 | >95 |
| 4 | 0.26 | 1.44 | 54.9 [a)] | n.a. | 2.1 | n.a. | >95 |
| 5 | 0.25 | 1.50 | 82.2 | 21 | 2.3 | n.a. | n.a. |
| 6 | 0.20 | 1.34 | 67.1 | 17.8. | 2.1 | n.a. | n.a. |
| 7 | 0.29 | 1.49 | 60.1 | 15.2 | 2.3 | n.a. | n.a. |
| 8 | 0.25 | 1.43 | 48.7[a)] | n.a. | 2.2 | n.a. | n.a. |

n.a. = not available

a) after annealing at room temperature for 30 days

**Table 2**

| Example | | A | 1 | 2 |
|---|---|---|---|---|
| Ethylene content | %wt (IR) | 2.3 | -- | -- |
| Hexene content | %wt (NMR) | -- | 4.75 | 8.65 |
| | %mol (NMR) | -- | 3.22 | 5.94 |
| Melt flow rate E | g/10' | 5.0 | 3.9 | 4.5 |
| $T_m$ Form II | °C | 75 | 93 | 80 [a] |
| $\triangle H_f$ Form II | J/g | n.a. | 32 [a] | 26 [a] |
| Tensile modulus (1-3% chord) | MPa | 103 | 106 | 85 |
| Tensile strength at yield | MPa | 6.6 | 6.6 | 5.3 |
| Tensile strength at break | MPa | 37.1 | 36.7 | 33.2 |
| Elongation at break | % | 434 | 366 | 444 |
| n.a.=not available<br>a) after annealing at room temperature for 30 days | | | | |

A comparison between the butene-ethylene (2.3 %wt $C_2$, IR) copolymer of the prior art and the butene-hexene copolymer according to the present invention (4.75 %wt $C_6$, $^{13}C$ NMR) points out the higher melting temperature and melting enthalpy of the latter, all the other properties being the same.

A comparison between the same butene-ethylene (2.3 %wt $C_2$, IR) copolymer of the prior art and a more modified butene-hexene copolymer (8.65 %wt $C_6$, $^{13}C$ NMR) according to the present invention points out the higher melting temperature and flexibility of the latter, all the other properties being similar. In table 2 the superiority of the butene-hexene copolymers of the present invention with respect to the butene-ethylene copolymer of the prior art is shown by a better thermal resistance and a higher flexibility.

## Claims

**1.** A process for preparing isotactic 1-butene copolymers containing up to 30% by mol of units derived from one or more alpha olefins selected from 1-pentene, 1-hexene and 1-octene comprising contacting 1-butene and one or more of said alpha-olefins, under polymerization conditions, in the presence of a catalyst system obtainable by contacting:

a) at least a metallocene compound of formula (I)

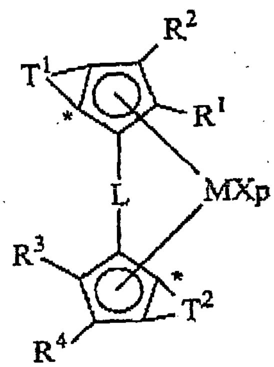

(I)

wherein

M is a transition metal belonging to group 3, 4, 5, 6 or to the lanthanide or actinide groups in the Periodic Table of the Elements,;

p is an integer from 0 to 3, being equal to the formal oxidation state of the metal M minus 2;

X, equal to or different from each other, are hydrogen atoms, halogen atoms, or R, OR, $OSO_2CF_3$, OCOR, SR, $NR_2$ or $PR_2$ groups, wherein R is a linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from $C_1$-$C_{20}$ alkylidene, $C_6$-$C_{40}$ arylidene, $C_7$-$C_{40}$ alkylarylidene and $C_7$-$C_{40}$ arylalkylidene radicals;

L is a bivalent bridging group selected from $C_1$-$C_{20}$ alkylidene, $C_3$-$C_{20}$ cycloalk-ylidene, $C_6$-$C_{20}$ arylidene, $C_7$-$C_{20}$ alkylarylidene, and $C_7$-$C_{20}$

arylalkylidene radicals optionally containing heteroatoms belonging to groups 13-17 of the Periodic Table of the Elements, and silylidene radical containing up to 5 silicon atoms;

$R^1$ and $R^3$, equal to or different from each other, are linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radicals, optionally containing heteroatoms belonging to groups 13-17 of the Periodic Table of the Elements;

$R^2$ and $R^4$, equal to or different from each other, are hydrogen atoms or linear or branched, saturated or unsaturated $C_1$-$C_{20}$ alkyl, $C_3$-$C_{20}$ cycloalkyl, $C_6$-$C_{20}$ aryl, $C_7$-$C_{20}$ alkylaryl or $C_7$-$C_{20}$ arylalkyl radicals, optionally containing heteroatoms belonging to groups 13-17 of the Periodic Table of the Elements;

$T^1$ and $T^2$, equal to or different from each other are moieties of formula (II), (III) or (IV):

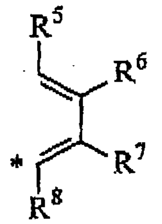
(II)

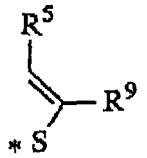
(III)

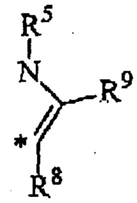
(IV)

wherein: the atom marked with the * is bound to the atom marked with the same symbol in formula (I);

$R^5$, $R^6$, $R^7$, $R^8$ and $R^9$, equal to or different from each other, are hydrogen atoms, or a linear or branched, saturated or unsaturated $C_1$-$C_{20}$-alkyl, $C_3$-$C_{20}$-cycloalkyl, $C_6$-$C_{40}$-aryl, $C_7$-$C_{40}$-alkylaryl, $C_7$-$C_{40}$-arylalkyl radicals, optionally containing heteroatoms belonging to groups 13-17 of the Periodic Table of the Elements;

$R^6$ and $R^7$ can also join to form a saturated or unsaturated condensed 5 to 7 membered ring optionally containing heteroatoms belonging to groups 13-16 of the Periodic Table of the Elements; and

b) at least an alumoxane or a compound able to form an alkylmetallocene cation.

**2.** The process according to claim 1 wherein the catalyst system further comprises organo aluminium compound.

**3.** The process according to claim 1 or 2 wherein in the compound of formula (I) M is titanium, zirconium or hafnium; X is a hydrogen atom, a halogen atom or a R group; L is selected from the group consisting of $Si(CH_3)_2$, $SiPh_2$, SiPhMe, $SiMe(SiMe_3)$, $CH_2$, $(CH_2)_2$, $(CH_2)_3$ and $C(CH_3)_2$ and $R^9$ is a hydrogen atom or a linear or branched, saturated or unsaturated $C_1$-$C_{20}$-alkyl radical.

**4.** The process according to anyone of claims 1 to 3 wherein the metallocene compound has formula (V):

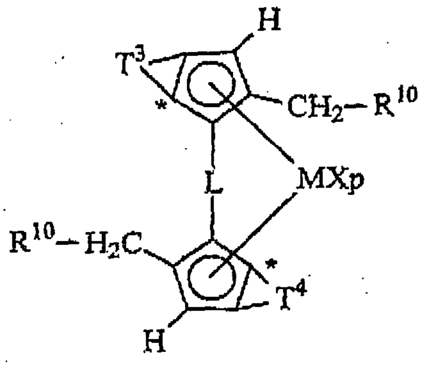

(V)

wherein M, L, X and p have the same meaning as in claim 1;
$R^{10}$, equal to or different from each other, are hydrogen atoms, or linear or branched, saturated or unsaturated $C_1$-$C_{19}$-alkyl, $C_3$-$C_{19}$-cycloalkyl, $C_6$-$C_{19}$-aryl, $C_7$-$C_{19}$-alkylaryl, $C_7$-$C_{19}$-arylalkyl radicals, optionally containing heteroatoms belonging to group 13-17 of the Periodic Table of the Elements;
$T^3$ and $T^4$, equal to or different from each other are moieties of formula (Va), (Vb) or (Vc):

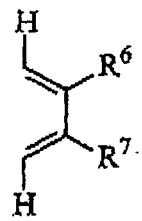

(Va)

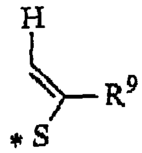

(Vb)

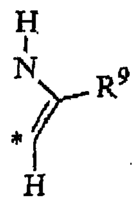

(Vc)

wherein: the atom marked with the symbol * is bound to the atom marked with the same symbol in formula (V); $R^6$, Rand $R^9$ have the same meaning as in claim 1.

**5.** The process according to claim 4 wherein in the compound of formula (V) $R^{10}$ is a hydrogen atom or a $C_1$-$C_{19}$-alkyl radical; $R^6$, $R^7$ are hydrogen atoms or linear or branched, saturated or unsaturated $C_1$-$C_{20}$-alkyl radicals, or they can form a saturated or unsaturated 5 or 6 membered ring optionally containing heteroatoms belonging to groups 13-16 of the Periodic Table of the Elements; and $R^9$ is a linear or branched, saturated or unsaturated $C_1$-$C_{20}$-alkyl radical.

**6.** The process according to anyone of claims 1 to 3 wherein the metallocene compound has formula (VI):

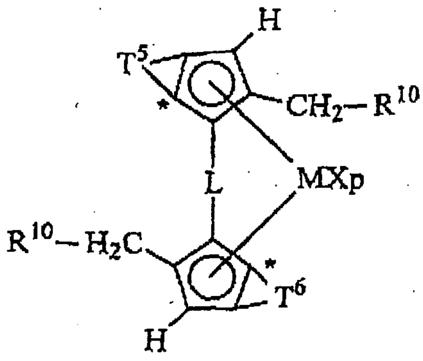

(VI)

wherein M, L, X and p have the same meaning as in claim 1 and $R^{10}$, equal to or different from each other, are hydrogen atoms, or linear or branched, saturated or unsaturated $C_1$-$C_{19}$-alkyl, $C_3$-$C_{19}$-cycloalkyl, $C_5$-$C_{19}$-aryl, $C_7$-$C_{19}$-alkylaryl, $C_7$-$C_{19}$-arylalkyl radicals, optionally containing heteroatoms belonging to groups 13-17 of the Periodic Table of the Elements;

$T^5$ and $T^6$, equal to or different from each other are moieties of formula (Via), (Vib) or (Vic):

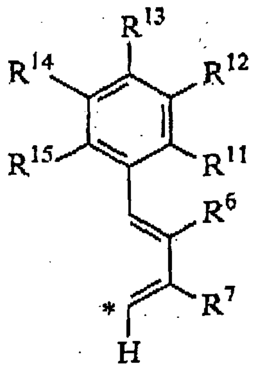

(Via)

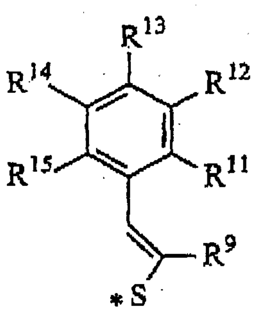

(Vib)

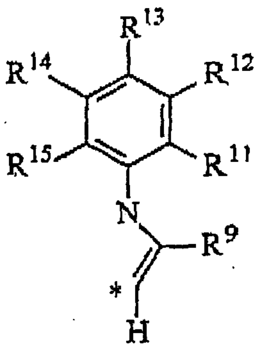

(Vic)

wherein: the atom marked with the symbol * is bound to the atom marked with the same symbol in formula (VI);

$R^6$, $R^7$ and $R^9$, have the same meaning as in claim 1;

$R^{11}$, $R^{12}$, $R^{13}$, $R^{14}$, and $R^{15}$, equal to or different from each other, are hydrogen atoms or linear or branched, saturated or unsaturated $C_1$-$C_{20}$-alkyl, $C_3$-$C_{20}$-cycloalkyl, $C_6$-$C_{20}$-aryl, $C_7$-$C_{20}$-akylaryl, $C_7$-$C_{20}$-arylalkyl radicals, optionally containing heteroatoms belonging to groups 13-17 of the Periodic Table of the Elements, or two adjacent groups can form together a saturated or unsaturated condensed 5 or 6 membered ring optionally containing heteroatoms belonging to groups 13-16 of the Periodic Table of the Elements.

7. The process according to claim 6 wherein $R^6$, $R^7$ are hydrogen atoms or linear or branched, saturated or unsaturated $C_1$-$C_{20}$-alkyl radicals; or they can form a saturated or unsaturated 5 or 6 membered ring optionally containing heteroatoms belonging to groups 13-16 of the Periodic Table of the Elements; $R^9$ is a hydrogen atom or a linear or branched, saturated or unsaturated $C_1$-$C_{20}$-alkyl radical; $R^{11}$ is a $C_1$-$C_{20}$-alkyl radical; $R^{14}$ is a hydrogen atom or a $C_1$-$C_{20}$-alkyl radical; and $R^{12}$, $R^{13}$ and $R^{15}$ are hydrogen atoms.

8. The process according to anyone of claims 1 to 7 wherein the content of said alpha olefins derived units in the copolymer is from 2% to 20% by mol.

9. An isotactic 1-butene copolymer containing from 2% to 20% by mol of one or more alpha-olefins selected from 1-pentene, 1-hexene and 1-octene having the following features:

- isotactic pentads (mmmm) >90%; and
- the percentage of soluble fraction in diethylether (%SD) and the molar content of said alpha olefins (%O) in the polymer chain meet the following relation:

$$\%SD>2.8\%O + 8;$$

and
- presence of 4,1 insertions in the polymer chain.

**10.** The isotactic 1-butene copolymer according to claim 9 wherein the percentage of soluble fraction content in diethylether (%SD) and the molar content of said alpha olefins (%O) in the polymer chain meet the following relation:

$$\%SD>2.8\%O + 10.$$

**11.** The isotactic 1-butene copolymer according to claims 9 or 10 having a content of alpha-olefin derived units comprised between 10% and 30% by mol and having percentage of soluble fraction in diethylether >92%.

**12.** The isotactic 1-butene copolymer according to claims 9 or 10 having a content of alpha-olefin derived units comprised between 5% and 12% by mol and having percentage of soluble fraction in diethylether >41 %.

**13.** An isotactic 1-butene copolymer containing 2% to 20% by mol of one or more alpha-olefins selected from 1-pentene, 1-hexene and 1-octene

- isotactic pentads (mmmm) >90%; and
- presence of 4,1 insertions in the polymer chain.

## Patentansprüche

**1.** Verfahren zum Herstellen isotaktischer 1-Buten-Copolymere, enthaltend bis zu 30 Mol-% Einheiten, die sich von einem oder mehr α-Olefin(en) ableiten, die aus 1-Penten, 1-Hexen und 1-Octen ausgewählt sind, umfassend das in Kontakt bringen von 1-Buten und einem oder mehr der α-Olefine, unter Polymerisationsbedingungen, in Gegenwart eines Katalysatorsystems, erhaltbar durch das in Kontakt bringen von:

a) mindestens einer Metallocen-Verbindung der Formel (I)

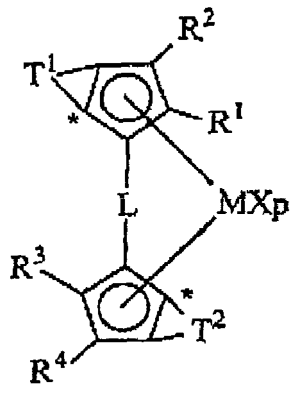

(I)

worin

M ein Übergangsmetall darstellt, das zur Gruppe 3, 4, 5, 6 oder zu den Lanthanoid- oder Aktinoid-Gruppen im Periodensystem der Elemente gehört;
p eine ganze Zahl von 0 bis 3 darstellt, die mit dem formalen Oxidationszustand des Metalls minus 2 gleich ist;
X, gleich zueinander oder verschieden voneinander, Wasserstoffatome, Halogenatome oder R-, OR-, $OSO_2CF_3$-, OCOR-, SR-, $NR_2$- oder $PR_2$-Gruppen darstellen, worin R einen linearen oder verzweigten, gesättigten oder ungesättigten $C_1$-$C_{20}$-Alkyl-, $C_3$-$C_{20}$-Cycloalkyl-, $C_6$-$C_{20}$-Aryl-, $C_7$-$C_{20}$-Alkylaryl- oder $C_7$-$C_{20}$-Arylalkylrest darstellt, der optional Heteroatome enthält, die zu den Gruppen 13-17 des Periodensystems der Elemente gehören; oder zwei X optional einen substituierten oder nicht substituierten Butadienylrest oder eine OR'O-Gruppe bilden können, worin R' einen divalenten Rest darstellt, der aus $C_1$-$C_{20}$-Alkyliden-, $C_6$-$C_{40}$-Aryliden-, $C_7$-$C_{40}$-Alkylaryliden- und $C_7$-$C_{40}$-Arylalkylidenresten ausgewählt ist;
L eine divalente brückenbildende Gruppe darstellt, die aus $C_1$-$C_{20}$-Alkyliden-, $C_3$-$C_{20}$-Cycloalkyliden-, $C_6$-$C_{20}$-Aryliden-, $C_7$-$C_{20}$-Alkylaryliden- und $C_7$-$C_{20}$-Arylalkylidenresten ausgewählt ist, die optional Heteroatome enthalten, die zu den Gruppen 13-17 des Periodensystems der Elemente gehören, und der Silylidenrest bis zu 5 Siliziumatome enthält;
$R^1$ und $R^3$, gleich zueinander oder verschieden voneinander, lineare oder verzweigte, gesättigte oder ungesättigte $C_1$-$C_{20}$-Alkyl-, $C_3$-$C_{20}$-Cycloalkyl-, $C_6$-$C_{20}$-Aryl-, $C_7$-$C_{20}$-Alkylaryl- oder $C_7$-$C_{20}$-Arylalkylreste darstellen, die optional Heteroatome enthalten, die zu den Gruppen 13-17 des Periodensystems der Elemente gehören;
$R^2$ und $R^4$, gleich zueinander oder verschieden voneinander, Wasserstoffatome oder lineare oder verzweigte, gesättigte oder ungesättigte $C_1$-$C_{20}$-Alkyl-, $C_3$-$C_{20}$-Cycloalkyl-, $C_6$-$C_{20}$-Aryl-, $C_7$-$C_{20}$-Alkylaryl- oder $C_7$-$C_{20}$-Arylalkylreste darstellen, die optional Heteroatome enthalten, die zu den Gruppen 13-17 des Periodensystems der Elemente gehören;
$T^1$ und $T^2$, gleich zueinander oder verschieden voneinander, Teile der Formel (II), (III) oder (IV) darstellen:

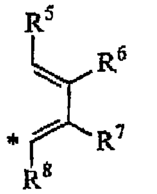

(II)

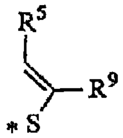

(III)

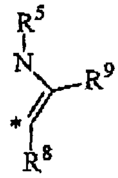

(IV)

worin das mit dem Zeichen * markierte Atom an das mit dem gleichen Zeichen in der Formel (I) markierte Atom gebunden ist;
$R^5$, $R^6$, $R^7$, $R^8$ und $R^9$, gleich zueinander oder verschieden voneinander, Wasserstoffatome oder lineare oder verzweigte, gesättigte oder ungesättigte $C_1$-$C_{20}$-Alkyl-, $C_3$-$C_{20}$-Cycloalkyl-, $C_6$-$C_{40}$-Aryl-, $C_7$-$C_{40}$-Alkylaryl- oder $C_7$-$C_{40}$-Arylalkylreste darstellen, die optional Heteroatome enthalten, die zu den Gruppen 13-17 des Periodensystems der Elemente gehören;
$R^6$ und $R^7$ sich zur Bildung eines gesättigten oder ungesättigten kondensierten 5-bis 7-gliedrigen Rings, der optional Heteroatome enthält, die zu den Gruppen 13-16 des Periodensystems der Elemente gehören, auch miteinander verbinden können; und

b) mindestens einem Alumoxan oder einer Verbindung, die zur Bildung eines Alkylmetallocenkations fähig ist.

**2.** Verfahren nach Anspruch 1, worin das Katalysatorsystem ferner eine Organoaluminium-Verbindung umfasst.

**3.** Verfahren nach Anspruch 1 oder 2, worin in der Verbindung der Formel (I) M Titan, Zirkonium oder Hafnium darstellt; X ein Wasserstoffatom, ein Halogenatom oder eine R-Gruppe darstellt; L aus der Gruppe ausgewählt ist, bestehend aus $Si(CH_3)_2$, $SiPh_2$, SiPhMe, $SiMe(SiMe_3)$, $CH_2$, $(CH_2)_2$, $(CH_2)_3$ und $C(CH_3)_2$, und $R^9$ ein Wasserstoffatom oder einen linearen oder verzweigten, gesättigten oder ungesättigten $C_1$-$C_{20}$-Alkylrest darstellt.

**4.** Verfahren nach einem der Ansprüche 1 bis 3, worin die Metallocen-Verbindung die folgende Formel (V) aufweist:

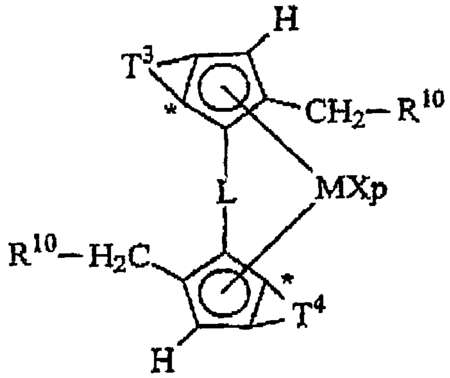

(V)

worin M, L, X und p die gleiche Bedeutung wie nach Anspruch 1 aufweisen;
$R^{10}$, gleich zueinander oder verschieden voneinander, Wasserstoffatome oder lineare oder verzweigte, gesättigte oder ungesättigte $C_1$-$C_{19}$-Alkyl-, $C_3$-$C_{19}$-Cycloalkyl-, $C_6$-$C_{19}$-Aryl-, $C_7$-$C_{19}$-Alkylaryl- oder $C_7$-$C_{19}$-Arylalkylreste darstellen, die optional Heteroatome enthalten, die zu den Gruppen 13-17 des Periodensystems der Elemente gehören;
$T^3$ und $T^4$, gleich zueinander oder verschieden voneinander, Teile der folgenden Formel (Va), (Vb) oder (Vc) darstellen:

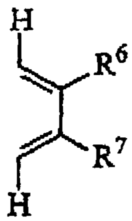

(Va)

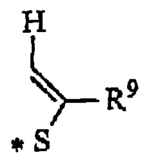

(Vb)

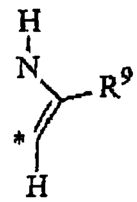

(Vc)

worin das mit dem Zeichen * markierte Atom an das mit dem gleichen Zeichen in der Formel (V) markierte Atom gebunden ist;
$R^6$, $R^7$ und $R^9$ die gleiche Bedeutung wie nach Anspruch 1 aufweisen.

**5.** Verfahren nach Anspruch 4, worin in der Verbindung der Formel (V) $R^{10}$ ein Wasserstoffatom oder einen $C_1$-$C_{19}$-Alkylrest darstellt; $R^6$ und $R^7$ Wasserstoffatome oder lineare oder verzweigte, gesättigte oder ungesättigte $C_1$-$C_{20}$-Alkylreste darstellen oder sie einen gesättigten oder ungesättigten 5- oder 6-gliedrigen Ring bilden können, der optional Heteroatome enthält, die zu den Gruppen 13-16 des Periodensystems der Elemente gehören; und $R^9$ einen linearen oder verzweigten, gesättigten oder ungesättigten $C_1$-$C_{20}$-Alkylrest darstellt.

**6.** Verfahren nach einem der Ansprüche 1 bis 3, worin die Metallocen-Verbindung die folgende Formel (VI) aufweist:

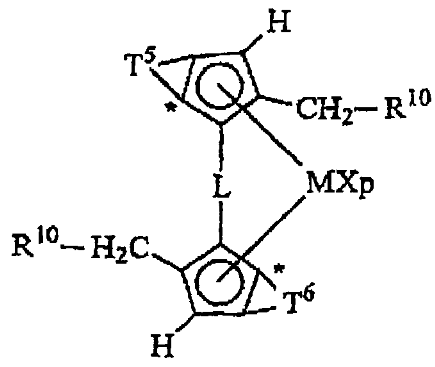

(VI)

worin M, L, X und p die gleiche Bedeutung wie nach Anspruch 1 aufweisen, und $R^{10}$, gleich zueinander oder verschieden voneinander, Wasserstoffatome oder lineare oder verzweigte, gesättigte oder ungesättigte $C_1$-$C_{19}$-Alkyl-, $C_3$-$C_{19}$-Cycloalkyl-, $C_6$-$C_{19}$-Aryl-, $C_7$-$C_{19}$-Alkylaryl- oder $C_7$-$C_{19}$-Arylalkylreste darstellen, die optional Heteroatome enthalten, die zu den Gruppen 13-17 des Periodensystems der Elemente gehören;
$T^5$ und $T^6$, gleich zueinander oder verschieden voneinander, Teile der folgenden Formel (Via), (Vib) oder (Vic) darstellen:

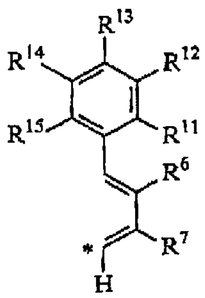

(Via)

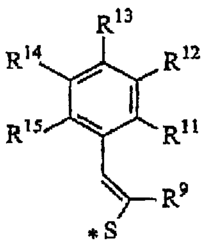

(VIb)

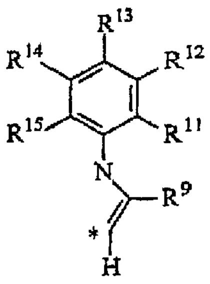

(Vic)

worin das mit dem Zeichen markierte Atom an das mit dem gleichen Zeichen in Formel (VI) markierte Atom gebunden ist;
$R^6$, $R^7$ und $R^9$ die gleiche Bedeutung wie nach Anspruch 1 aufweisen;
$R^{11}$, $R^{12}$, $R^{13}$, $R^{14}$ und $R^{15}$, gleich zueinander oder verschieden voneinander, Wasserstoffatome oder lineare oder verzweigte, gesättigte oder ungesättigte $C_1$-$C_{20}$-Alkyl-, $C_3$-$C_{20}$-Cycloalkyl-, $C_6$-$C_{20}$-Aryl-, $C_7$-$C_{20}$-Alkylaryl- oder $C_7$-$C_{20}$-Arylalkylreste darstellen, die optional Heteroatome enthalten, die zu den Gruppen 13-17 des Periodensystems der Elemente gehören, oder zwei benachbarte Gruppen zusammen einen gesättigten oder ungesättigten kondensierten 5- oder 6-gliedrigen Ring bilden können, der optional Heteroatome enthält, die zu den Gruppen 13-16 des Periodensystems der Elemente gehören.

**7.** Verfahren nach Anspruch 6, worin $R^6$ und $R^7$ Wasserstoffatome oder lineare oder verzweigte, gesättigte oder ungesättigte $C_1$-$C_{20}$-Alkylreste darstellen; oder sie einen gesättigten oder ungesättigten 5- oder 6-gliedrigen Ring bilden können, der optional Heteroatome enthält, die zu den Gruppen 13-16 des Periodensystems der Elemente gehören; $R^9$ ein Wasserstoffatom oder einen linearen oder verzweigten, gesättigten oder ungesättigten $C_1$-$C_{20}$-Alkylrest darstellt; $R^{11}$ einen $C_1$-$C_{20}$-Alkylrest darstellt; $R^{14}$ ein Wasserstoffatom oder einen $C_1$-$C_{20}$-Alkylrest darstellt; und $R^{12}$ , $R^{13}$ und $R^{15}$ Wasserstoffatome darstellen.

**8.** Verfahren nach einem der Ansprüche 1 bis 7, worin der Gehalt sich von den $\alpha$-Olefinen ableitenden Einheiten im Copolymer von 2 Mol-% bis 20 Mol-% beträgt.

**9.** Isotaktisches 1-Buten-Copolymer, enthaltend von 2 Mol-% bis 20 Mol-% von einem oder mehr $\alpha$-Olefin(en), die aus 1-Penten, 1-Hexen und 1-Octen ausgewählt sind, das die folgenden Merkmale aufweist:

- isotaktische Pentaden (mmmm) von >90 %; und
- der prozentuale Anteil der löslichen Fraktion in Diethylether (% SD) und der molare Gehalt der $\alpha$-Olefine (% O) in der Polymerkette der folgenden Relation entspricht:

$$\% \ SD > 2{,}8 \ \% \ O + 8;$$

und
- Vorliegen von 4,1 Insertionen in der Polymerkette.

**10.** Isotaktisches 1-Buten-Copolymer nach Anspruch 9, worin der prozentuale Anteil des Gehalts der löslichen Fraktion in Diethylether (% SD) und der molare Gehalt der $\alpha$-Olefine (% O) in der Polymerkette der folgenden Relation entspricht:

$$\% \ SD > 2{,}8 \ \% \ O+10.$$

**11.** Isotaktisches 1-Buten-Copolymer nach einem der Ansprüche 9 oder 10, das einen Gehalt sich von $\alpha$-Olefin ableitenden Einheiten aufweist, die zwischen 10 Mol-% und 30 Mol-% umfassen, und einen prozentualen Anteil einer löslichen Fraktion in Diethylether von >92 % aufweist.

**12.** Isotaktisches 1-Buten-Copolymer nach einem der Ansprüche 9 oder 10, das einen Gehalt sich von $\alpha$-Olefin ableitenden Einheiten aufweist, die zwischen 5 Mol-% und 12 Mol-% umfassen, und einen prozentualen Anteil einer löslichen Fraktion in Diethylether von >41 % aufweist.

**13.** Isotaktisches 1-Buten-Copolymer, enthaltend 2 Mol-% bis 20 Mol-% von einem oder mehr $\alpha$-Olefin(en), die aus 1-Penten, 1-Hexen und 1-Octen ausgewählt sind, das die folgenden Merkmale aufweist:

- isotaktische Pentaden (mmmm) von >90 %; und
- Vorliegen von 4,1 Insertionen in der Polymerkette.

## Revendications

**1.** Procédé pour préparer des copolymères isotactiques de 1-butène contenant jusqu'à 30% en mole d'unités dérivées d'une ou de plusieurs alpha-oléfines choisies parmi le 1-pentène, le 1-hexène et le 1-octène comprenant la mise en contact de 1-butène et d'une ou de plusieurs desdites alpha-oléfines, dans des conditions de polymérisation, en présence d'un système de catalyseur pouvant être obtenu en mettant en contact :

a) au moins un composé de type métallocène de formule (I)

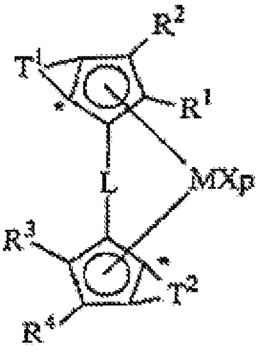

(I)

ou

M est un métal de transition appartenant au groupe 3, 4, 5, 6 ou aux groupes des lanthanides ou des actinides dans le tableau périodique des éléments ;

p est un entier de 0 à 3, égal à l'étage d'oxydation formel du métal M moins 2 ;

X, identiques ou différents les uns des autres, représentent des atomes d'hydrogène, des atomes d'halogène ou des groupes R, OR, $OSO_2CF_3$, OCOR, SR, $NR_2$ ou $PR_2$, où R représente un radical $C_1$-$C_{20}$-alkyle linéaire ou ramifié, saturé ou insaturé, $C_3$-$C_{20}$-cycloalkyle, $C_6$-$C_{20}$-aryle, $C_7$-$C_{20}$-alkylaryle ou $C_7$-$C_{20}$-arylalkyle, contenant éventuellement des hétéroatomes appartenant aux groupes 13-17 du tableau périodique des éléments ; ou deux X peuvent éventuellement former un radical butadiényle substitué ou non substitué ou un groupe OR'O où R' est un radical divalent choisi parmi les radicaux $C_1$-$C_{20}$-alkylidène, $C_6$-$C_{40}$-arylidène, $C_7$-$C_{40}$-alkylarylidène et $C_7$-$C_{40}$-arylalkylidène ;

L est un groupe formant un pont, divalent, choisi parmi les radicaux $C_1$-$C_{20}$-alkylidène, $C_3$-$C_{20}$-cycloalkylidène, $C_6$-$C_{20}$-arylidène, $C_7$-$C_{20}$-alkylarylidène et $C_7$-$C_{20}$-arylalkylidène, contenant éventuellement des hétéroatomes appartenant aux groupes 13-17 du tableau périodique des éléments, et un radical silylidène contenant jusqu'à 5 atomes de silicium ;

$R^1$ et $R^3$ , identiques ou différents l'un de l'autre, représentent des radicaux $C_1$-$C_{20}$-alkyle linéaires ou ramifiés, saturés ou insaturés, $C_3$-$C_{20}$-cycloalkyle, $C_6$-$C_{20}$-aryle, $C_7$-$C_{20}$-alkylaryle ou $C_7$-$C_{20}$-arylalkyle, contenant éventuellement des hétéroatomes appartenant aux groupes 13-17 du tableau périodique des éléments ;

$R^2$ et $R^4$ , identiques ou différents l'un de l'autre, représentent des atomes d'hydrogène ou des radicaux $C_1$-$C_{20}$-alkyle linéaires ou ramifiés, saturés ou insaturés, $C_3$-$C_{20}$-cycloalkyle, $C_6$-$C_{20}$-aryle, $C_7$-$C_{20}$-alkylaryle ou $C_7$-$C_{20}$-arylalkyle, contenant éventuellement des hétéroatomes appartenant aux groupes 13-17 du tableau périodique des éléments ;

$T^1$ et $T^2$ , identiques ou différents l'un de l'autre, sont des fragments de formule (II), (III) ou (IV) :

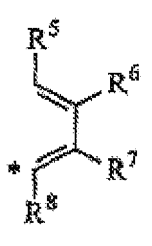

(II)

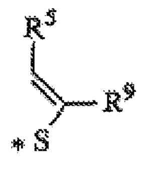

(III)

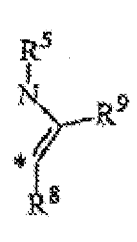

(IV)

où : l'atome marqué par * est lié à l'atome marqué par le même symbole dans la formule (I) ;

$R^5$, $R^6$, $R^7$, $R^8$ et $R^9$ , identiques ou différents les uns des autres, représentent des atomes d'hydrogène ou des radicaux $C_1$-$C_{20}$-alkyle linéaires ou ramifiés, saturés ou insaturés, $C_3$-$C_{20}$-cycloalkyle, $C_6$-$C_{40}$-aryle,

$C_7$-$C_{40}$-alkylaryle, $C_7$-$C_{40}$-arylalkyle, contenant éventuellement des hétéroatomes appartenant aux groupes 13-17 du tableau périodique des éléments ;

$R^6$ et $R^7$ peuvent également se rejoindre pour former un cycle de 5 à 7 chaînons, saturé ou insaturé, condensé contenant éventuellement des hétéroatomes appartenant aux groupes 13-16 du tableau périodique des éléments ; et

b) au moins un aluminoxane ou un composé capable de former un cation de type alkylmétallocène.

**2.** Procédé selon la revendication 1, dans lequel le système de catalyseur comprend en outre un composé organique de l'aluminium.

**3.** Procédé selon la revendication 1 ou 2, dans lequel, dans le composé de formule (I), M représente titane, zirconium ou hafnium ; X représente un atome d'hydrogène, un atome d'halogène ou un groupe R ; L est choisi dans le groupe constitué par $Si(CH_3)_2$, $SiPh_2$, SiPhMe, $SiMe(SiMe_3)$, $CH_2$, $(CH_2)_2$, $(CH_2)_3$ et $C(CH_3)_2$ et $R^9$ représente un atome d'hydrogène ou un radical $C_1$-$C_{20}$-alkyle linéaire ou ramifié, saturé ou insaturé.

**4.** Procédé selon l'une quelconque des revendications 1 à 3, dans lequel le composé de type métallocène présente la formule (V) :

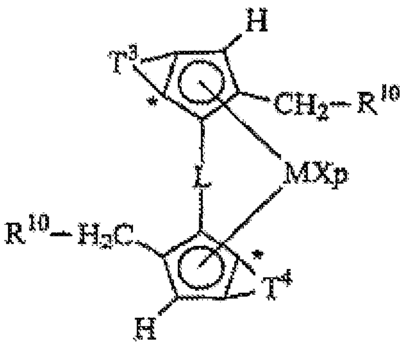

(V)

où M, L, X et p ont la même signification que dans la revendication 1 ;

$R^{10}$, identiques ou différents l'un de l'autre, représentent des atomes d'hydrogène ou des radicaux $C_1$-$C_{19}$-alkyle linéaires ou ramifiés, saturés ou insaturés, $C_3$-$C_{19}$-cycloalkyle, $C_6$-$C_{19}$-aryle, $C_7$-$C_{19}$-alkylaryle, $C_7$-$C_{19}$-arylalkyle, contenant éventuellement des hétéroatomes appartenant aux groupes 13-17 du tableau périodique des éléments ;

$T^3$ et $T^4$ , identiques ou différents l'un de l'autre, sont des fragments de formule (Va), (Vb) ou (Vc) :

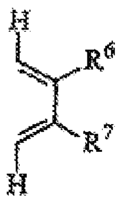

(Va)

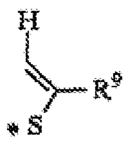

(Vb)

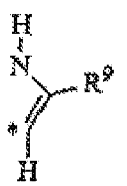

(Vc)

où : l'atome marqué par le symbole * est lié à l'atome marqué par le même symbole dans la formule (V) ; $R^6$, $R^7$ et $R^9$ ont la même signification que dans la revendication 1.

**5.** Procédé selon la revendication 4, dans lequel, dans le composé de formule (V), $R^{10}$ représente un atome d'hydrogène ou un radical $C_1$-$C_{19}$-alkyle ; $R^6$, $R^7$ représentent des atomes d'hydrogène ou des radicaux $C_1$-$C_{20}$-alkyle linéaires ou ramifiés, saturés ou insaturés, ou ils peuvent former un cycle de 5 ou 6 chaînons saturé ou insaturé, contenant éventuellement des hétéroatomes appartenant aux groupes 13-16 du tableau périodique des éléments ; et $R^9$ est un radical $C_1$-$C_{20}$-alkyle linéaire ou ramifié, saturé ou insaturé.

**6.** Procédé selon l'une quelconque des revendications 1 à 3, dans lequel le composé de type métallocène présente la formule (VI) :

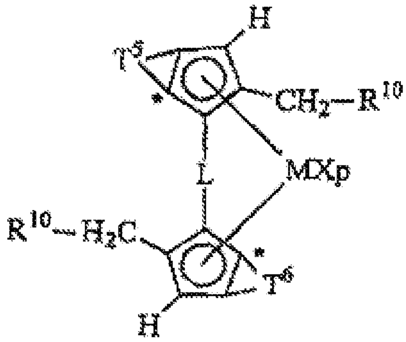

(VI)

où M, L, X et p ont la même signification que dans la revendication 1 et $R^{10}$, identiques ou différents l'un de l'autre, représentent des atomes d'hydrogène ou des radicaux $C_1$-$C_{19}$-alkyle linéaires ou ramifiés, saturés ou insaturés, $C_3$-$C_{19}$-cycloalkyle, $C_6$-$C_{19}$-aryle, $C_7$-$C_{19}$-alkylaryle, $C_7$-$C_{19}$-arylalkyle, contenant éventuellement des hétéroatomes appartenant aux groupes 13-17 du tableau périodique des éléments ;

$T^5$ et $T^6$, identiques ou différents l'un de l'autre, sont des fragments de formule (Via), (Vib) ou (Vic) :

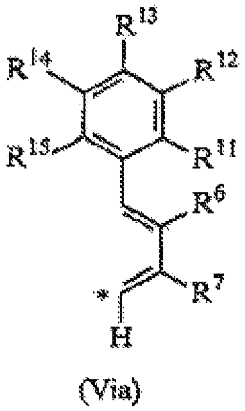

(Via)

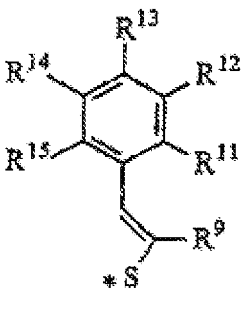

(Vib)

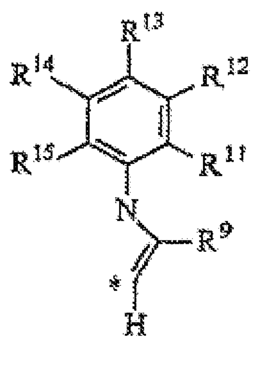

(Vic)

où : l'atome marqué par le symbole * est lié à l'atome marqué par le même symbole dans la formule (VI) :
$R^6$, $R^7$ et $R^9$, ont la même signification que dans la revendication 1 ;
$R^{11}$, $R^{12}$, $R^{13}$, $R^{14}$, et $R^{15}$, identiques ou différents les uns des autres, représentent des atomes d'hydrogène ou des radicaux $C_1$-$C_{20}$-alkyle linéaires ou ramifiés, saturés ou insaturés, $C_3$-$C_{20}$-cydoalkyle, $C_6$-$C_{20}$-aryle, $C_7$-$C_{20}$-alkylaryle, $C_7$-$C_{20}$-arylalkyle, contenant éventuellement des hétéroatomes appartenant aux groupes 13-17 du tableau périodique des éléments, ou deux groupes adjacents peuvent former ensemble un cycle de

5-6 chaînons saturé ou insaturé, condensé, contenant éventuellement des hétéroatomes appartenant aux groupes 13-16 du tableau périodique des éléments.

**7.** Procédé selon la revendication 6, dans lequel, $R^6$, $R^7$ sont des atomes d'hydrogène ou des radicaux $C_1$-$C_{20}$-alkyle linéaires ou ramifiés, saturés ou insaturés ; ou ils peuvent former un cycle de 5 ou 6 chaînons, saturé ou insaturé, contenant éventuellement des hétéroatomes appartenant aux groupes 13-16 du tableau périodique des éléments ; $R^9$ représente un atome d'hydrogène ou un radical $C_1$-$C_{20}$-alkyle linéaire ou ramifié, saturé ou insaturé ; $R^{11}$ représente un radical $C_1$-$C_{20}$-alkyle; $R^{14}$ représente un atome d'hydrogène ou un radical $C_1$-$C_{20}$-alkyle ; et $R^{12}$, $R^{13}$ et $R^{15}$ représentent des atomes d'hydrogène.

**8.** Procédé selon l'une quelconque des revendications 1 à 7, dans lequel la teneur en unités dérivées desdites alpha-oléfines dans le copolymère est de 2% à 20% en mole.

**9.** Copolymère isotactique de 1-butène contenant 2% à 20% en mole d'une ou de plusieurs alpha-oléfines choisies parmi le 1-pentène, le 1-hexène et le 1-octène présentant les caractéristiques suivantes :

- pentades isotactiques (mmmm) > 90% ; et
- le pourcentage de fraction soluble dans le diéthyléther (% SD) et la teneur molaire en lesdites alpha-oléfines (% O) dans la chaîne polymère répondent à la relation suivante :

$$\% \text{ SD} > 2{,}8\% \text{ O} + 8 \ ;$$

et
- présence de 4,1 insertions dans la chaîne polymère.

**10.** Copolymère isotactique de 1-butène selon la revendication 9, dans lequel le pourcentage de teneur en fraction soluble dans le diéthyléther (% SD) et la teneur molaire en lesdites alpha-oléfines (% O) dans la chaîne polymère répondent à la relation suivante :

$$\% \text{ SD} > 2{,}8\% \text{ O} + 10.$$

**11.** Copolymère isotactique de 1-butène selon les revendications 9 ou 10 présentant une teneur en unités dérivées d'alpha-oléfine comprise entre 10% et 30% en mole et présentant un pourcentage de fraction soluble dans le diéthyléther > 92%.

**12.** Copolymère isotactique de 1-butène selon les revendications 9 ou 10 présentant une teneur en unités dérivées d'alpha-oléfine comprise entre 5% et 12% en mole et présentant un pourcentage de fraction soluble dans le diéthyléther > 41 %.

**13.** Copolymère isotactique de 1-butène contenant 2% à 20% en mole d'une ou de plusieurs alpha-oléfines choisies parmi le 1-pentène, le 1-hexène et le 1-octène

- pentades isotactiques (mmmm) > 90% ; et
- présence de 4,1 insertions dans la chaîne polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 186287 A
- EP 352362 A
- WO 0216450 A
- WO 02100909 A
- WO 02100908 A
- WO 0304258 A
- JP 62119213 A
- JP 60262804 A
- EP 353318 A
- US P5145819 A
- EP 0485823 A
- WO 9822486 A
- WO 0144318 A
- US P5786432 A
- EP 02080120 A
- WO 9921899 A
- WO 0121674 A
- WO 9102012 A
- WO 9200333 A
- WO 0162764 A
- EP 775707 A
- DE 19917985
- DE 19962814 A
- DE 19962910 A
- WO 0144319 A
- EP 633272 A
- WO 9532995 A
- EP 0206574 W


### Non-patent literature cited in the description


- *Journal of Molecular Catalysis A: Chemical,* 1998, vol. 128, 215-227
- **V. Busico ; R. Cipullo ; A. Borriello.** *Macromol. Rapid. Commun.,* 1995, vol. 16, 269-274
- **Carman, C. J. ; Harrington, R. A. ; Wilkes, C. E.** *Macromolecules,* 1977, vol. 10, 536